Europäisches Patentamt

European Patent Office

Office européen des brevets

(19)

(11) Numéro de publication: **0 153 210**
**B1**

(12) **FASCICULE DE BREVET EUROPÉEN**

(45) Date de publication du fascicule du brevet:
27.04.88

(51) Int. Cl.⁴: **B 62 M 3/08**

(21) Numéro de dépôt: **85400122.9**

(22) Date de dépôt: **25.01.85**

(54) **Platine pour chaussure cycliste.**

(30) Priorité: **14.02.84 FR 8402198**

(43) Date de publication de la demande:
**28.08.85 Bulletin 85/35**

(45) Mention de la délivrance du brevet:
**27.04.88 Bulletin 88/17**

(84) Etats contractants désignés:
**BE CH DE IT LI NL**

(56) Documents cité:
**EP-A-0 098 329**
**WO-A-80/01056**
**FR-A-2 403 757**
**FR-A-2 427 800**
**FR-A-2 464 660**
**US-A-3 964 343**

(73) Titulaire: **Sté. Look Société Anonyme, B. P. 72
Rue de la Pique, F-58004 Nevers Cedex (FR)**

(72) Inventeur: **Le Faou, Daniel, 2, rue Surcouf, F-35520
Melesse (FR)**
Inventeur: **Mercier, Michel, Rue du Champ Martin,
F-58640 Coulanges Les Nevers (FR)**

(74) Mandataire: **Tony- Durand, Serge, Cabinet Tony-
Durand 77, rue Boissière, F-75116 Paris (FR)**

LIBER, STOCKHOLM 1988

## Description

La présente invention concerne une platine destinée à être fixée sous la semelle d'une chaussure cycliste et adaptée pour coopérer avec des moyens d'accrochage ou de retenue portés par la pédale de bicyclette, ladite platine étant réalisée en un matériau dur et résistant et étant équipée d'au moins un patin en matériau souple et élastique qui fait saillie vers le bas par rapport à sa face inférieure.

Une platine de ce genre est connue par la première addition·FR-E-59 316 au brevet français FR-A-967 277.

Il est possible par ailleurs de classer les platines du genre ci-dessus en deux catégories.

Les platines de la première catégorie, généralement appelées cale-pédales, ont la forme d'une plaquette qui est creusée d'une fente transversale par laquelle elle peut être engagée sur la scie arrière d'une pédale de type traditionnel (équipée d'une cale-pied) afin d'éviter tout glissement de la chaussure dans le sens longitudinal au cours du pédalage. Des cale-pédales de ce type sont décrits par exemple dans les brevets français publiés sous les numéros 2 397 319 et 1 391 970, ainsi que dans le certificat d'utilité français 2 438 867.

Les platines de la seconde catégorie sont des platines conçues pour être utilisées avec des pédales spécialement adaptées, dépourvues de cale-pied. Dans ce cas la solidarisation de la chaussure avec la pédale est réalisée uniquement par des moyens d'accrochage portés par la pédale et en prise avec la platine. Le système d'accrochage permet également un dégagement rapide (sans intervention manuelle) du pied soit par une action volontaire du cycliste avant l'arrêt, soit automatiquement à la suite d'une chute. Des platines de ce type sont représentées par exemple dans le certificat d'utilité français publié sous le numéro 2 485 226 (Figure 17), les brevets français publiés sous les numéros 2 315 875 et 1 030 485 et dans la demande de brevet français de la demanderesse déposée sous le n° 8 320 185.

Les platines pour chaussures cycliste sont généralement réalisées en un matériau dur et résistant, notamment en métal léger (alliage d'aluminium) ou en matière plastique à caractéristiques mécaniques élevées (par exemple résine acétal). Ainsi elles peuvent être fixées solidement à la semelle de la chaussure, ordinairement à l'aide de vis et/ou de clous, et transmettre efficacement les efforts de pédalage de la chaussure à la pédale, tout en ayant une durée de vie élevée. Ces platines présentent malheureusement l'inconvénient qu'elles rendent la marche à pied malaisée. En effet sur un sol dur, le contact de la platine avec le sol engendre un choc désagréable aux sens. D'autre part un matériau dur et solide a généralement un faible coefficient de frottement, si bien que la platine glisse facilement sur un sol lisse, rendant la marche délicate, voire dangereuse.

On a déjà proposé dans la lère addition N° 59 316 déjà mentionnée de réaliser un cale-pédale en matériau souple (par exemple en cuir ou en caoutchouc), apparemment dans l'unique but de rendre la marche insonore. La fente du cale-pédale est protégée par une garniture métallique destinée à en empêcher la détérioration.

Une solution analogue est décrite dans je brevet belge N° 495 635.

S'il est vraisemblable que ces cale-pédales facilitent la marche à pied, ils ne donnent pas non plus toute satisfaction à notre époque car les efforts de pédalage considérables et parfois violents développés par les coureurs cyclistes modernes risquent de provoquer très rapidement leur déformation et de conduire à leur détérioration prématurée.

Le brevet français publié sous le N° 2 403 757 propose une solution différente, qui consiste à prévoir sous la chaussure une garniture protectrice en forme de patin antidérapant. Ce patin est agencé pour pouvoir occuper sélectivement l'une ou l'autre de deux positions: l'une active, pour la marche, dans laquelle il recouvre le cale-pédale et l'autre escamotée, pour le pédalage, dans laquelle il découvre le cale-pédale. Malheureusement cette solution n'est pas non plus entièrement satisfaisante car le cycliste est obligé de déplacer manuellement la position du patin antidérapant lorsqu'il descend de la bicyclette pour marcher et, inversement, lorsqu'il remonte à bicyclette pour pédaler. Cette opération est peu pratique et est une cause de perte de temps, inacceptable dans certaines épreuves, notamment de cyclo-cross.

L'invention vise à obvier aux inconvénients de ces platines pour chaussures cyclistes connues et propose une platine qui soit solide de manière à transmettre intégralement et sans déformation les efforts nécessaires au pédalage, tout en rendant la marche plus aisée.

Ce but est atteint dans la platine faisant l'objet de la présente invention en ce que le patin - dont un au moins en matériau souple et élastique équipe la platine - est logé dans une ouverture de forme complémentaire ménagée dans la platine.

Ainsi c'est la partie dure et résistante de la platine qui reçoit et transmet les efforts de pédalage tandis que, durant la marche à pied, le contact de la chaussure avec le sol est amorti par le patin; en outre ce patin possède une adhérence sur le sol lisse bien meilleure que celle de la partie dure de la platine, ce qui facilite considérablementment la marche.

Le montage du patin dans la platine peut être effectuée de toute manière appropriée, notamment par collage, par simple emboîtement, par encliquetage élastique ou par encliquetage combiné avec collage; cette liaison est de préférence démontable afin de permettre le remplacement du patin en cas d'usure.

Le patin est avantageusement pourvu sur sa face inférieure de reliefs antidérapants destinés à en augmenter encore le coefficient de frottement.

Enfin, plusieurs patins peuvent être prévus sur la platine de manière à en augmenter la surface d'appui au sol.

L'invention sera mieux comprise et ses particularités et avantages seront mis en évidence grâce à la description qui va maintenant en être faite en se référant aux dessins annexés qui montrent trois exemples de réalisation de platine conforme à l'invention.

La figure 1 montre en vue de dessous un premier exemple de réalisation de platine selon l'invention;

La figure 2 est une vue de côté, coupée par le plan vertical longitudinal II-II de la figure 1;

La figure 3 montre en vue de dessous un second exemple de réalisation selon l'invention;

La figure 4 est une vue de côté, coupée par le plan vertical longitudinal IV-IV de la figure 3;

La figure 5 montre en vue de dessous un troisième exemple de réalisation de platine selon l'invention;

La figure 6 est une vue de côté, coupée par le plan vertical longitudinal VI-VI de la figure 5.

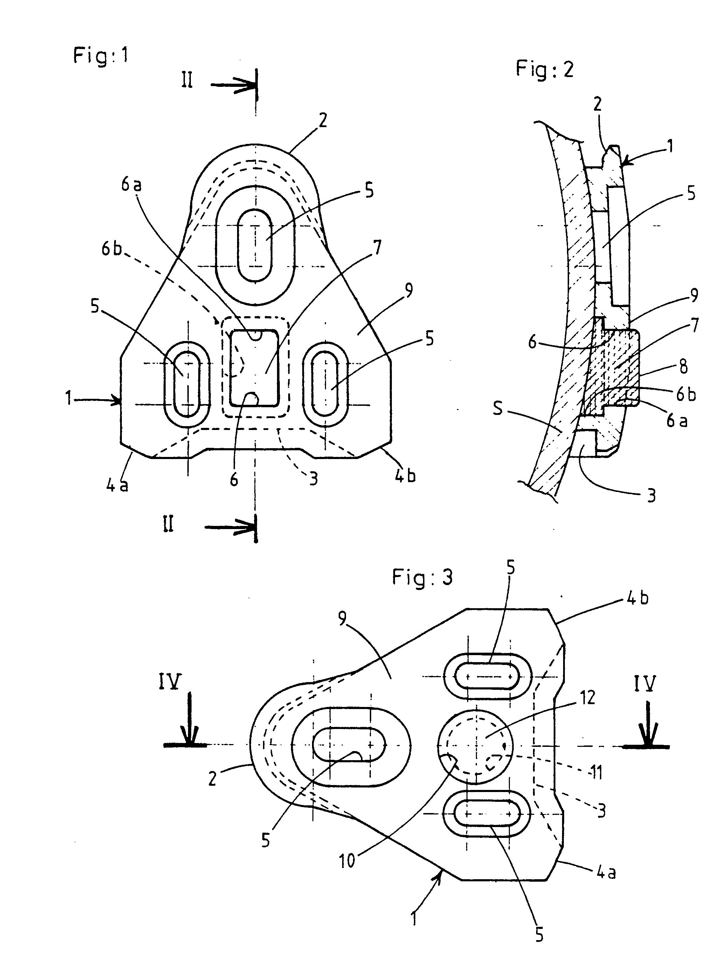

La platine 1 représentée aux figures 1 et 2 est similaire à celle décrite dans la demande de brevet français N° 8 320 185 de la demanderesse. Elle présente sur son bord antérieur un bec arrondi 2 et sur sa face postérieure une encoche transversale 3 située entre deux bords de guidage arqués 4a, 4b. La platine 1 est fixée par sa face supérieure courbe contre le dessous de la semelle S de la chaussure cycliste au moyen de vis qui traversent des lumières 5 ménagées de manière appropriée dans la platine. Dans un but de simplification ces vis n'ont pas été représentées.

Le bec 2, l'encoche 3 et les bords arqués 4a, 4b servent à l'accrochage et au guidage de la platine sur la pédale associée; le rôle et le fonctionnement de ces différents éléments qui sont décrits exhaustivement dans la demande de brevet précitée, n'ont pas été repris dans la présente demande (pour ne pas l'alourdir inutilement) car ils ne concernent pas directement l'invention. Il convient, si on le souhaite, de se reporter à cette demande de brevet antérieure.

La platine 1 est traversée par une ouverture 6 de contour rectangulaire, qui présente des parois étagées de telle manière que sa partie inférieure 6a (débouchant vers le bas) est plus petite que sa partie supérieure 6b (débouchant vers le haut).

La platine 1 est équipée d'un patin en matière souple et élastique 7 qui présente un profil étagé complémentaire de celui de l'ouverture 6 et une épaisseur légèrement supérieure à celle de la platine. Le patin 7 est mis en place, avant fixation de la platine sous la chaussure, par simple emboîtement de haut en bas dans l'ouverture 6. Après fixation de la platine sous la chaussure, il est donc complètement solidaire de la platine et son extrémité inférieure 8, fait saillie vers le bas par rapport à la face inférieure 9 de celle-ci.

La platine 1 est réalisée en matériau dur et résistant en métal léger ou en matière plastique à haute résistance (par exemple une résine acétal ou un élastomère de polyester); le patin 7 est en caoutchouc synthétique, matériau souple, élastique et à coefficient de frottement élevé.

On constate par conséquent que l'ensemble des parties de la platine 1 qui sont sollicitées mécaniquement durant le pédalage, à savoir le bord des trous de vis 5, le bec 2, l'encoche 3 et les parois arquées 4a, 4b possède des caractéristiques mécaniques élevées. Par contre durant la marche à pied c'est l'extrémité 8 du patin souple et peu glissant 7 qui vient en contact avec le sol, rendant la marche plus confortable et plus sûre.

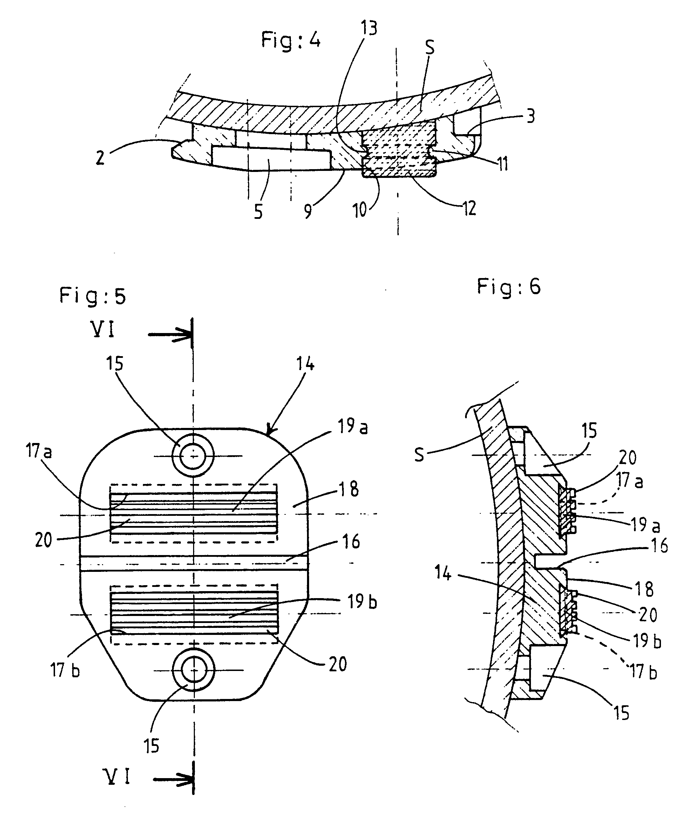

Dans le second exemple de réalisation des figures 3 et 4 la platine 1 est identique à celle des figures 1 à 2 et a par conséquent été désignée par les mêmes références que précédemment. Elle est traversée par un trou cylindrique 10 pourvu d'une collerette ou bourrelet annulaire interne 11. Le patin 12 a la forme d'un bouchon cylindrique présentant une rainure annulaire 13 complémentaire du bourrelet 11. Le patin 12 est mis en place dans le trou 10 par encliquetage élastique, ce mode d'assemblage étant possible en raison de la souplesse et de l'élasticité du patin (caoutchouc). Au montage le bourrelet 11 se loge dans la rainure annulaire 13. Après montage la face inférieure du patin 12 fait saillie au dessous de la face inférieure 9 de la platine. C'est donc le patin qui vient en contact avec le sol durant la marche.

La présente forme de réalisation présente l'avantage que le patin est amovible. Il peut être remplacé facilement en cas d'usure sans que l'on ait à enlever préalablement la platine de la semelle.

Le troisième exemple de réalisation des figures 5 et 6 à trait à une platine de type traditionnel, appelé cale-pédale. Cette platine 14 présente des trous 15 adaptés pour recevoir des vis (non représentées) permettant de la fixer sous la semelle d'une chaussure cycliste S. La platine 14 est réalisée (comme les platines 1 décrites précédemment) en un matériau dur et résistant. Elle est creusée d'une fente transversale 16 adaptée pour s'engager sur le bord supérieur de la traverse (ou scie) arrière d'une pédale de bicyclette classique.

La platine 14 est évidée devant et derrière la fente 16 par deux renfoncements à contour rectangulaire 17a, 17b qui débouchent sur sa face inférieure 18. Ces renfoncements présentent un profil en queue d'aronde. La platine est équipée de deux patins en matériau souple et élastique qui ont la forme de plaquettes rectangulaires 19a, 19b. Celles-ci ont un profil complémentaire de celui des renfoncements 17 mais ont une épaisseur légèrement supérieure à la profondeur de ces renfoncements. Les plaquettes 19a, 19b sont montées par encliquetage élastique dans les renfoncements associés 17a, 17b et, en plus, éventuellement collées dans ces renfoncements de manière à empêcher qu'elles ne s'arrachent inopinément de la platine.

Les faces inférieures des plaquettes 19a, 19b, qui font saillie en dessous de la face inférieure 19 de la platine, portent des reliefs en forme de nervures transversales 20 destinées à améliorer encore leur adhérence sur le sol durant la marche; bien sûr divers reliefs antidérapants pourraient être utilisés à la place de nervures par exemple des stries croisées ou des picots.

Il est évident qu'on peut imaginer, sans sortir du cadre de l'invention, d'équiper une platine pour chaussure cycliste de patins de formes, de dimensions et en nombre différents de celles et ceux prévus sur les trois exemples de réalisation qui viennent d'être décrits. Par exemple pour une marche à pied confortable, il convient de choisir une surface d'appui du (ou des) patin(s) sur le sol qui soit la plus grande possible. Toutefois l'emplacement et les dimensions du (ou des) patin(s) devront être choisis de manière à ce qu'ils ne viennent pas en contact avec la pédale associée ou, du moins ne risquent pas de contrarier le fonctionnement normal de l'ensemble platine/pédale. Il s'agit là d'arrangements à la portée de l'homme de métier.

## Revendications

1. Platine destinée à être fixée sous la semelle d'une chaussure cycliste, et adaptée pour coopérer avec des moyens d'accrochage ou de retenue portés par la pédale de bicyclette, ladite platine étant réalisée en un matériau dur et résistant et étant équipée d'au moins un patin (7, 12, 19) en matériau souple et élastique qui fait saillie vers le bas par rapport à sa face inférieure (9, 18), caractérisée en ce que le patin (7, 12, 19) est logé dans une ouverture (6, 10, 17) de forme complémentaire ménagée dans la platine (1, 14).

2. Platine selon la revendication 1, caractérisée en ce que ladite ouverture (6, 10) traverse la platine de part en part de manière à déboucher à la fois sur ses faces supérieure et inférieure.

3. Platine selon la revendication 2, caractérisée en ce que ladite ouverture (6) et ledit patin (7) présentent des profils complémentaires étagés qui autorisent la mise en place du patin (7) de haut en bas dans la platine (1) avant fixation de cette dernièrre sous la semelle (S) et en interdisent le retrait après fixation.

4. Platine selon l'une des revendications 1 ou 2, caractérisée en ce que l'ouverture (10) et le patin (12) présentent des moyens de retenue conjugués tels que par exemple un bourrelet (11) et une rainure (13), qui permettent un montage par encliquetage élastique du patin (12) dans la platine (1).

5. Platine selon la revendication 1, caractérisée en ce que ladite ouverture (17) est un simple renfoncement, tandis que la patin (19) a la forme d'une plaquette dont l'épaisseur est légèrement supérieure à la profondeur du renfoncement.

6. Platine selon l'une quelconque des revendications 1 à 5, caractérisée en ce que le patin (7, 12, 19) est collé dans l'ouverture associée (6, 10, 17).

7. Platine selon l'une quelconque des revendications 1 à 6, caractérisée en ce que le patin (7, 12, 19) est pourvu sur sa face inférieure de reliefs antédérapants (20).

8. Platine selon l'une quelconque des revendications 1 à 7, caractérisée en ce que le patin (7, 12, 19) est en caoutchouc synthétique.

9. Platine selon l'une quelconque des revendications 1 à 8, caractérisée en ce qu'elle est équipée de plusieurs patins (19a, 19b).

## Patentansprüche

1. Platte zur Befestigung unter der Sohle eines Fahrradschuhs, die eingerichtet ist, um mit an dem Fahrradpedal angeordneten Verhakungseinrichtungen oder Rückhalteeinrichtungen zusammenzuwirken, wobei die Platte aus einem harten und widerstandsfähigen Material gefertigt ist und mit zumindest einem Sporn (7, 12, 19) aus weichem und elastischem Material versehen ist, der bezüglich ihrer Unterseite (9, 18) nach unten hervorspringt,
dadurch gekennzeichnet, daß der Sporn (7, 12, 19) in einer in der Platte (1, 14) ausgebildeten Öffnung (8, 10, 17) von komplementärer Form aufgenommen ist.

2. Platte nach Anspruch 1,
dadurch gekennzeichnet, daß die Öffnung (6, 10) die Platte derart vollständig durchdringt, daß sie zugleich an ihrer oberen und unteren Fläche mündet.

3. Platte nach Anspruch 2,
dadurch gekennzeichnet, daß die Öffnung (6) und der Sporn (7) komplementäre, abgestufte Profile aufweisen, die das Einsetzen des Sporns (7) von oben nach unten in die Platte (1) vor der Befestigung der letzteren unter der Sohle (S) gestatten und das Herausnehmen nach der Befestigung unterbinden.

4. Platte nach einem Ansprüche 1 oder 2,
dadurch gekennzeichnet, daß die Öffnung (10) und der Sporn (12) Rückhalteelemente aufweisen, die beispielsweise durch einen wulst (11) und eine Nut (13) einander zugeordnet sind, welche durch ein elastisches Einrasten des Sporns (12) in die Platte (1) eine Montage gestatten.

5. Platte nach Anspruch 1,
dadurch gekennzeichnet, daß die Öffnung (17) eine einfache Vertiefung ist, während der Sporn (19) die Form eines Plättchens besitzt, dessen Dicke etwas größer ist als die Tiefe der Vertiefung.

6. Platte nach einem der Ansprüche 1 bis 5,
dadurch gekennzeichnet, daß der Sporn (7, 12, 19) in der zugeordneten Öffnung (6, 10, 17) verklebt ist.

7. Platte nach einem der Ansprüche 1 bis 6,
dadurch gekennzeichnet, daß der Sporn (7, 12, 19) auf seiner Unterseite mit Anti-Rutsch-Profilen (20) versehen ist.

8. Platte nach einem der Ansprüche 1 bis 7, dadurch gekennzeichnet, daß der Sporn (7, 12, 19) aus synthetischem Kautschuk besteht.

9. Platte nach einem der Ansprüche 1 bis 8, dadurch gekennzeichnet, daß sie mit mehreren Spornen (19a, 19b) versehen ist.

**Claims**

1. Mounting support which is intended to be fixed beneath the sole of a cyclist's shoe and is adapted to cooperate with fastening or retaining means carried by the bicycle pedal, said mounting support being formed of material having high hardness and strength and being equipped with at least one pad (7, 12, 19) of flexible and resilient material which forms a downward projection with respect to its underface (9, 18), characterized in that the pad (7, 12, 19) is housed within an opening (6, 10, 17) of complementary shape formed in the mounting support (1, 14).

2. Mounting support in accordance with claim 1, characterized in that said opening (6, 10) extends through the support from one side to the other in order to have openings on both its top and bottom faces.

3. Mounting support in accordance with claim 2, characterized in that said opening (6) and said pad (7) have stepped complementary profiles which permit downward positioning of the pad (7) within the mounting support (1) prior to attachment of this latter beneath the sole (S) and prevent its removal after fastening.

4. Mounting support in accordance with one of claims 1 or 2, characterized in that the opening (10) and the pad (12) are provided with associated retaining means such as for example a bead (11) and a groove (13) which permit mounting of the pad (12) by resilient snap-action engagement in the mounting support (1).

5. Mounting support in accordance with claim 1, characterized in that said opening (17) is a simple recess whilst the pad (19) has the shape of a small plate whose thickness is slightly greater than the depth of the recess.

6. Mounting support in accordance with any one of claims 1 to 5, characterized in that the pad (7, 12, 19) is bonded within the associated opening (6, 10, 17).

7. Mounting support in accordance with any one of claims 1 to 6, characterized in that the bottom face of the pad (7, 12, 19) is provided with non-slip surface elevations and depressions (20).

8. Mounting support in accordance with any one of claims 1 to 7, characterized in that the pad (7, 12, 19) is of synthetic rubber.

9. Mounting support in accordance with any one of claims 1 to 8, characterized in that it is equipped with a plurality of pads (19a, 19b).

Fig: 1

Fig: 2

Fig: 3

0 153 210

Fig: 4

13    S

2          3

5   9   10   12   11

Fig: 5

VI

15        14
                19 a
17 a           18
20             16
               19 b
17 b           20

15

VI

Fig: 6

S        15
              20
              17 a
         19 a
14       16
         18
         20
         19 b
         17 b
15

3